# EUROPEAN PATENT SPECIFICATION

(11) **EP 1 916 663 B1**
(45) Date of publication and mention of the grant of the patent: **13.07.2011**
(21) Application number: 07020833.5
(22) Date of filing: 24.10.2007
(51) Int. Cl.: G11B 33/02

(54) **Information reproducing apparatus**
Vorrichtung zur Wiedergabe von Informationen
Appareil de reproduction d'informations

(30) Priority: 25.10.2006 JP 2006008700 U
(43) Date of publication of application: 30.04.2008
(73) Proprietor: Funai Electric Co., Ltd., Daito-shi, Osaka 574-0013 (JP)
(72) Inventor: Yoshida, Kazuyoshi, Daito-shi Osaka 574-0013 (JP)
(74) Representative: Grünecker, Kinkeldey, Stockmair & Schwanhäusser Anwaltssozietät

(56) References cited:
- EP-A1- 1 619 684
- US-A- 5 301 178
- US-A1- 2006 037 768

## Description

### BACKGROUND OF THE INVENTION

### 1. Field of the Invention

The present invention relates to an information reproducing apparatus including a DVD recorder in which a front panel can be attached to and detached from a body chassis according to the preamble of independent claim 1.

### 2. Description of the Related Art

Conventionally, a front panel in an information reproducing equipment including a DVD recorder is attached to and detached from a body chassis or the like to protect an inner portion of a front surface side in the equipment, and switches, knobs, and so on are attached to the front panel to adjust and control the equipment. The front panel having such a configuration is often separated from the body chassis to adjust an electronic circuit in the equipment and so on during production and repair, so that it is preferable that the front panel is easily detached from the body chassis for promptness of the operation. For example, such devices are known from EP 1 619 684 A1. However, as shown in FIGS. 8A, 8B, and 8C, in a conventional information reproducing apparatus 100, a front panel 120 which is made up of a resin member is fixed to a horizontally long reinforcement plate 110 which is fixed to a substantial rectangular body chassis (not shown) to be substantially parallel to a bottom surface portion of the body chassis. The reinforcement plate 110 is made up of a substantial rectangular planer plate 111 and includes screw holes 112 to screw a screw 130 in the body chassis in its end, plural engaging pawls 113 which project from an upper surface of the planer plate 111, and a L-shaped reinforcement portion 114 which follows the reinforcement plate 110 in the longitudinal direction. The front panel 120 has a projecting plate 122 which has an engaging hole 123 engaging with the engaging pawl 113 on its upper portion of the back surface side and is fixed to the reinforcement plate 110 by engaging the engaging hole 123 in the projecting plate 122 with the engaging pawl 113 on the reinforcement plate 110 and making the engaging pawl 113 be caught in the engaging hole 123. The projecting plate 122 has two platy ribs 124 and 125 which extend upward from the projecting plate 122 so as to be substantially parallel to each other and to be substantially perpendicular to the projecting plate 122. The projecting plate 122 has the engaging hole 123 between the two ribs 124 and 125, and the engaging hole 123 in the projecting plate 122 overlaps and engages with an upside of the engaging pawl 113 on the reinforcement plate 110, so that the projecting plate 122 is fixed to the reinforcement plate 110. In the above configuration, to release the engagement between the front panel 120 and the reinforcement plate 110, it is necessary to pick up the projecting plate 122 above the reinforcement plate 110. However, even when trying to pinch the ribs 124 and 125 from either side of the ribs 124 and 125, that is to say, from a direction shown by an arrow F2, with two fingers to pick up the projecting plate 122 in a direction shown by an arrow F1, the L-shaped reinforcement portion 114 in the reinforcement plate 110 and the screw 130 prevent the fingers from entering either side of the ribs 124 and 125 and thus it is difficult to pick up the projecting plate 122. Moreover, an edge of the projecting plate 122 is cut off and a taper 126 is provided there to carry out the smooth engagement with the reinforcement plate 110, however, it is difficult to have plenty of area of cutting off, so that it is difficult to release the above engagement by entering the finger (nail) in a gap between the taper 126 and the reinforcement plate 110, and the finger (nail) is often damaged by releasing the engagement forcedly. Consequently, the conventional configuration described above lacks a processing efficiency of adjustment, repair, and so on for the reason that additional jigs are necessary to detach the front panel 120, for example.

As shown in Japanese Laid-Open Patent Publication No. 2002-324981, there is a known electronic equipment installation apparatus in which an electronic equipment is inserted into an opening of a panel from a rear of the electronic equipment, and a cylindrical attachment adapter is fit in and fixed to an outer periphery of the rear of the electronic equipment so that the panel is attached to the electronic equipment. In the electronic equipment installation apparatus, an engaging concave-convex portion is provided on the side of the electronic equipment and elastic locking pieces including locking pawls which are locked in the engaging concave-convex portion and a release operating portion are provided on the side of the attachment adapter, and the locking can be released by pinching the release operating portion with plural fingers. However, the above electronic equipment installation apparatus needs the additional attachment adapter to attach the panel to the electronic equipment, and moreover, it has the configuration that the electronic equipment is pulled out backward from the panel, thus it has the complicated structure. Furthermore, the above installation apparatus does not attach the front panel to the body chassis of the equipment.

As shown in Japanese Laid-Open Patent Publication No. 2002-271042, there is a known attaching and detaching apparatus which has a coupling means to connect detachably one side of an operating portion when the other side of the operating portion is caught in a catching means to attach the operating portion to and detach the operation portion from the equipment body. The coupling means consists of a sliding means which has a sliding member sliding in an anteroposterior direction on the equipment body, and a gripping means which grips the operation portion. However, this apparatus needs the catching means and the coupling means to attach the panel to the equipment body, so that it has the complicated structure.

### SUMMARY OF THE INVENTION

An object of the present invention is to provide an information reproducing apparatus in which a front panel which is engaged with a body chassis of the information reproducing equipment and which covers a front surface of the information reproducing equipment can be unlocked and removed with fingers.

According to an aspect of the present invention, this object is achieved by an information reproducing apparatus, comprising: a body chassis having substantially a rectangular shape; a reinforcement plate which is fixed to the body chassis to be substantially parallel to a bottom surface portion of the body chassis to attach a front panel; and the front panel of substantial rectangular shape which engages with and is attached to the reinforcement plate to cover a front surface side of the body chassis.

The reinforcement plate is made up of a substantial rectangular planer plate and includes screw holes to screw the reinforcement plate to the body chassis in an end of the reinforcement plate in a longitudinal direction and plural engaging pawls which project from an upper surface of the substantial rectangular planer plate.

The front panel includes plural projecting plates which are located in an upper portion and a lower portion of a back surface of a front surface portion, respectively, so that they are substantially perpendicular to the front surface portion and substantially parallel to the reinforcement plate, and is attached to the body chassis by using the respective projecting plates in the upper portion and the lower portion.

The projecting plates in the upper portion of the front surface portion of the front panel is located in plural positions including an end portion of the front surface portion in a longitudinal direction and includes substantial rectangular engaging holes which engage with and are fixed to engaging pawls in the reinforcement plate.

The projecting plate which is located in the end portion of the front surface portion in the longitudinal direction out of the projecting plates which are located on the upper portion of the front surface portion includes two planar ribs which extend upward from the projecting plate so as to be substantially parallel to each other and to be substantially perpendicular to the projecting plate, and has one of the engaging holes between the two ribs.

The engaging holes in the projecting plates overlap and engage with an upside of the engaging pawls on the reinforcement plate so that the projecting plates are fixed to the reinforcement plate.

The information reproducing apparatus is characterised in that a collar portion is located on at least one of the two ribs to be substantially parallel to the projecting plate and that an engagement of the front panel with the reinforcement plate is released by pulling up the collar portions upward with fingers.

With the above configuration, the collar portion of the ribs can easily be pinched and pulled up with only the fingers, so that the projecting plate which engages with the reinforcement plate can easily be released with the fingers, and the front panel which is fixed to the body chassis can be detached easily. Consequently, in a detachment operation of the front panel during an adjustment process in a production line or during a repair, the process can be rapidly carried out without the jigs and so on, thus the processing efficiency of the production line is improved and the adjustment of the electronic circuit in the equipment and so on can be carried out efficiently. Moreover, the collar portions of the ribs are made up in the direction parallel to the projecting plate, so that the direction from which the mold of the collar portion is pulled out is the same as the direction from which the mold of the projecting plate is pulled out. Thus, it is possible to form the mold without a major change from the conventional mold making.

Preferably, the collar portion is located on both two ribs. With this configuration, each collar portion can be caught in the fingers, respectively, so that the projecting plate which engages with the reinforcement plate can be pulled up more strongly, and the engagement can be released more easily.

Preferably, at least one of the two ribs is located not in an end portion of the projecting plate in a width direction (a longitudinal direction in the front panel) but in a center of the projecting plate in the width direction. By locating the one of the two ribs in the center of the projecting plate, the collar portion can also be located in the center of the projecting plate, so that even when there is a screw in proximity to the end portion of the projecting plate in the width direction (the longitudinal direction of the front panel), a user can pinch the collar portion of the L-shaped ribs without the interruption of a screw head and so on.

### BRIEF DESCRIPTION OF THE DRAWINGS

The present invention will be described below with reference to the annexed drawings. It is to be noted that all the drawings are shown for the purpose of illustrating the technical concept of the present invention or embodiments thereof, wherein:
FIG. 1 is an exploded view of an information reproducing apparatus according to a preferred embodiment of the present invention;
FIG. 2 is a perspective view of the information reproducing apparatus viewed from a front surface side;
FIG. 3A is an enlarged view of a portion A in FIG. 1 viewed from a back side, and FIG. 3B is an enlarged view of a portion B in FIG. 3A;
FIG. 4 is a diagram showing a connection between a front panel and a reinforcement plate in the information reproducing apparatus;
FIG. 5A is a perspective view of a portion C in FIG. 4 viewed from a front surface, and FIG 5B is a plane view of FIG. 5A;
FIG. 6 is an enlarged view of a portion D in FIG. 5A;
FIG. 7 is a cross-sectional view along a line X1-X1 in FIG. 6; and

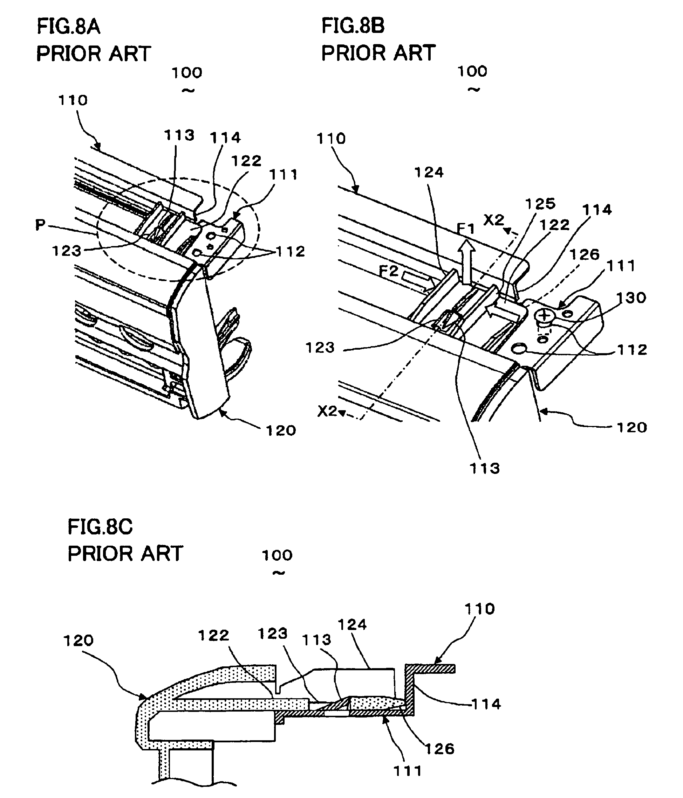

FIG. 8A is a partial perspective view of a conventional information reproducing apparatus, FIG. 8B is an enlarged view of a portion P in FIG. 8A, and FIG. 8C is a cross-sectional view along a line X2-X2 in FIG. 8B.

### DESCRIPTION OF THE PREFERRED EMBODIMENTS

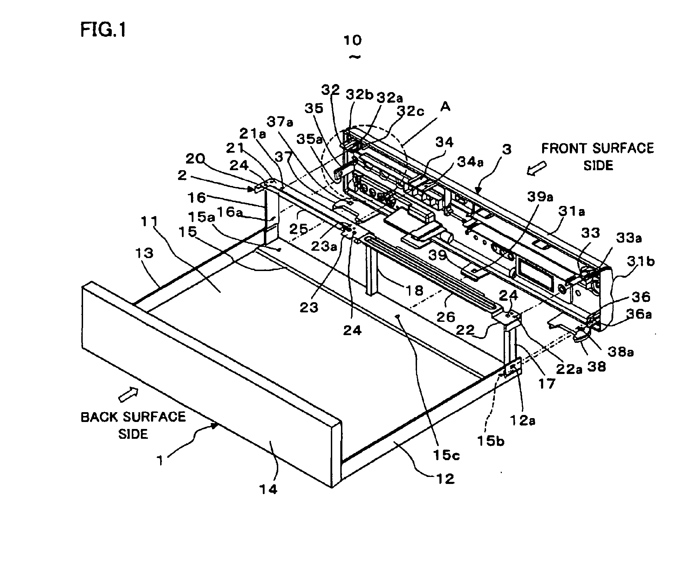

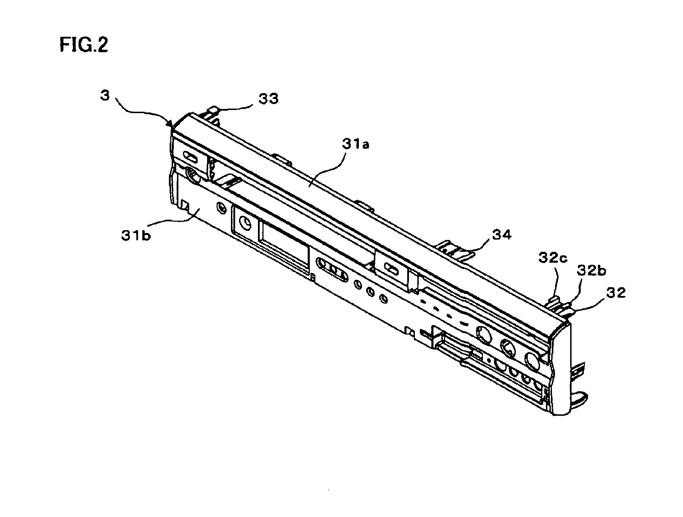

A preferred embodiment according to the present invention is described below with reference to the drawings. In FIGS. 1 and 2, an information reproducing apparatus 10 of the present embodiment includes a body chassis 1, a reinforcement plate 2, and a front panel 3. The front panel 3 which covers a front surface of the information reproducing apparatus 10 can be easily detached from the body chassis 1 to which a case which covers the information reproducing apparatus 10 is attached.

The body chassis 1 has substantially a rectangular shape and includes a bottom surface portion 11, side surface portions 12 and 13, and a back surface portion 14. On a front surface side of the bottom surface portion 11 to which the front panel 3 is attached, an engaging board 15 is formed to be parallel to the bottom surface portion 11 and to be higher in height than the bottom surface portion 11, and on a back surface of the engaging board 15, engaging pawls 15a, 15b, and 15c which engage a lower portion of the front panel 3 is provided. Moreover, plural supporting portions 16, 17, and 18 which support the reinforcement plate 2 are located on both ends and a middle portion of the engaging board 15 in the longitudinal direction, respectively, so as to be perpendicular to the engaging board 15 and to have substantially the same length. On the inner side in the supporting portion 16 and on the side surface portion 12 in the body chassis 1, engaging pawls 16a and 12a which engage with a side surface side of the front panel 3 are provided, respectively.

The reinforcement plate 2 is a metal plate which is fixed to the body chassis 1 to reinforce the chassis 1 and is made by a sheet metal processing with using metal members. The reinforcement plate 2 is made up of a substantially rectangular flat plate 20, and in both ends and a middle portion of the flat plate 20, substantially planar connecting portions 21, 22, and 23 with screw holes 24 are provided to be fixed to the supporting portions 16, 17, and 18 on the engaging board 15 in the body chassis 1, respectively. Connecting plates 25 and 26 make a connection between the connecting portions 21 and 23 and between the connecting portions 22 and 23 in proximity to each other, respectively, and engaging pawls 21a, 22a, and 23a which respectively engage with an upper portion side of the front panel 3 are provided to project from the flat plate 20 in the proximity of the connecting portions 21, 22, and 23.

The front panel 3 is made up of an elastic resin member or the like, and has a substantially rectangular frame 31 a and a front surface portion 31b which covers a front surface side of the frame 31a so as to serve as a front cover which is attached to the body chassis 1 and covers the front surface side of the body chassis 1. The front panel 3 includes plural planar projecting plates 32, 33, and 34 and projecting plates 37, 38, and 39 which are located in an upper portion and a lower portion of both ends and a middle portion of a back surface of the front surface portion 31 b, respectively, so that they are substantially perpendicular to the front surface portion 31 b and substantially parallel to the reinforcement plate 2. The projecting plates 32, 33, and 34 on the upper portion side include substantially rectangular engaging holes 32a, 33a, and 34a which engage with the engaging pawls 21a, 22a, and 23 a in the reinforcement plate 2, and the projecting plates 37, 38, and 39 on the lower portion side include substantially rectangular engaging holes 37a, 38a, and 39a which engage with the engaging pawls 15a, 15b, and 15c on the back surface of the engaging board 15 in the body chassis 1, respectively. On the right and left side surfaces in the back surface of the front surface portion 31b, projecting plates 35 and 36 are located to be substantially perpendicular to the front surface portion 31 b and to be substantially parallel to the side surface portions 12 and 13 in the body chassis 1. In the projecting plates 35 and 36, engaging holes 35a and 36a are provided to engage with the engaging pawl 16a on the supporting portions 16 and the engaging pawl 12a on the side surface portion 12 in the body chassis 1. The projecting plate 32 which is located on the end of the front surface portion 31b in the longitudinal direction has L-shaped ribs 32b and 32c on its flat plate.

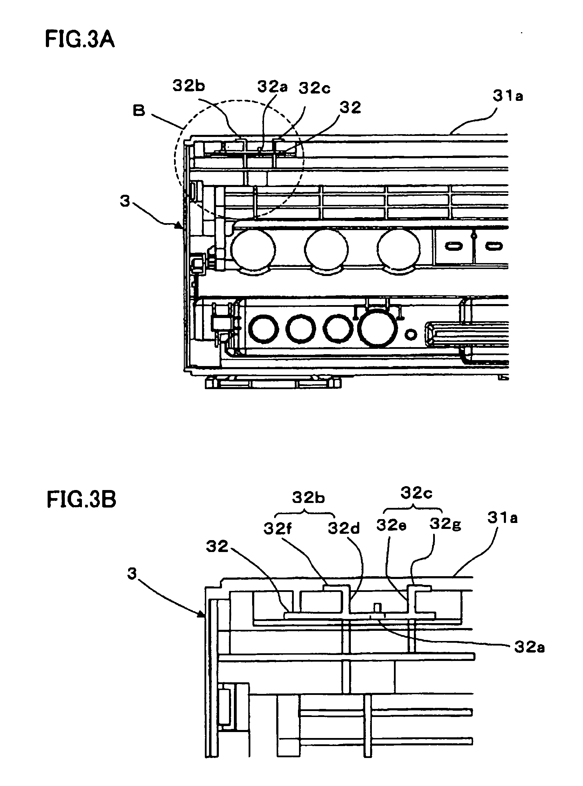

As shown in FIGS. 3A and 3B, the L-shaped ribs 32b and 32c are composed of two planar ribs 32d and 32e which extend upward from the flat plate of the projecting plate 32 so as to be substantially parallel to each other and to be substantially perpendicular to the flat plate of the projecting plate 32, and collar portions 32f and 32g which extend from upper ends of the ribs 32d and 32e in opposite directions from each other so as to be substantially parallel to the projecting plate 32. Each of the L-shaped ribs 32b and 32c has a height to extend close to an upper surface of the frame 31a of the front panel 3. The engaging hole 32a is located in a substantially middle position between the two ribs 32b and 32c. The ribs 32d and 32e also have a function of reinforcing the projecting plate 32. Moreover, the L-shaped ribs 32b and 32c and the projecting plate 32 are integrally formed to have the same thickness. Thus, when the projecting plate 32 is formed, a difference in hardening time during a cooling of the projecting plate 32 caused by the difference in thickness can be suppressed, and negative effects caused by surface sink, weld line, whitening, and so on can be eliminated, so that the homogeneous projecting plate 32 with less shape variation can be produced.

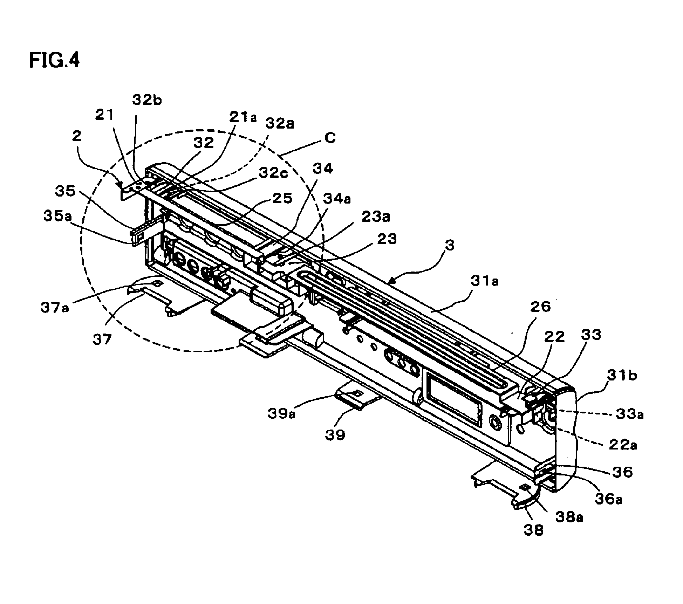

In the above configuration, as shown in FIG. 4, the front panel 3 is attached to the body chassis 1 (refer to FIG. 1) by engaging the projecting plates 32, 33, and 34 on the upper portion of the front surface portion 31b of the front panel 3 and the projecting plates 37, 38, and 39 on the lower portion of the front surface portion 31b of the front panel 3 with holding the reinforcement plate 2 and the body chassis 1 from an upper side of the reinforcement plate 2 and a lower side of the bottom surface portion 11 in the body chassis 1. At this time, the engaging holes 32a, 33a, and 34a in the projecting plates 32, 33, and 34 engage with the corresponding engaging pawls 21a, 22a, and 23a on the reinforcement plate 2 and are thereby caught in and fixed to them, respectively. The engaging holes 37a, 38a, and 39a in the projecting plates 37, 38, and 39 engage with the corresponding engaging pawls 15a, 15b, and 15c on the engaging board 15 in the body chassis 1, respectively. When the engaging holes 35a and 36a in the projecting plate 35 and 36 on the side surfaces of the front panel 3 engage with the engaging pawl 16a on the supporting portion 16 and the engaging pawl 12a on the side surface portion 12 in the body chassis 1, the side surfaces of the front panel 3 is fixed to the body chassis 1. In this manner, the front panel 3 engages with the body chassis 1 on the upper and lower side and the side surfaces, and thereby attached to the body chassis 1. In the engagement between the front panel 3 and the body chassis 1 in the present embodiment, the engagement between the upper portion of the front panel 3 and the reinforcement plate 2 is stronger than the engagement between both the lower portion and the side surfaces of the front panel 3 and the reinforcement plate 2. Consequently, the front panel 3 is adapted to be easily removed from the body chassis 1 by releasing the upper engagement. In FIG. 4, the illustration of the body chassis 1 is omitted to simplify the diagram.

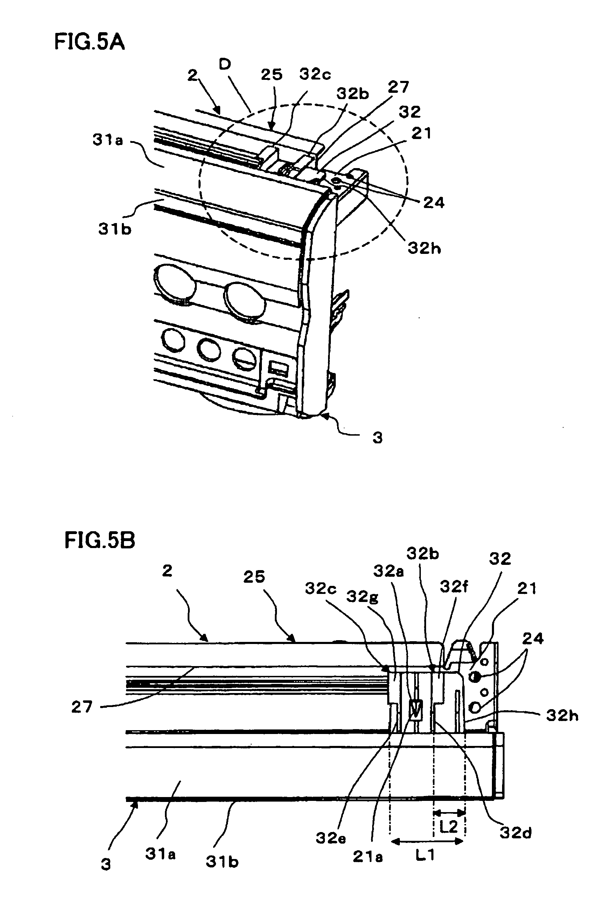

With regard to the engagement of the reinforcement plate 2 which is fixed to the body chassis 1 and the front panel 3, the engagement between the projecting plate 32 which is located on one end of the front surface portion 31b of the front panel 3 in the longitudinal direction and the reinforcement plate 2 is described with reference to FIGS. 5A and 5B. FIG. 5A is the partial perspective view of the information reproducing apparatus 10 of the present preferred embodiment viewed from the front surface side of the front panel 3, and FIG. 5B is a plane view of FIG. 5A. In FIGS. 5A and 5B, a L-shaped reinforcement portion 27 which reinforces the connecting plate 25 is formed in the reinforcement plate 2 with bending an end of the connecting plate 25 in the longitudinal direction upward to have the L-shape. Moreover, the L-shaped ribs 32b on the projecting plate 32 is located in a substantial center of the projecting plate 32 in a width direction (at a length L2 away from an end portion 32h in a direction away from the screw holes 24 (a right edge in FIG. 5A)) instead of an end portion 32h in the width L1 of the projecting plate 32. Thus, the L-shaped rib 32b can be separated from the screw holes 24, and the collar portion 32f can also get closer to the center of the projecting plate 32 in the width direction, so that even when there is a screw in proximity to the end portion of the projecting plate 32 in the width direction (in the longitudinal direction of the front panel 3), a user can pinch the collar portion 32f of the L-shaped rib 32b without an influence of the screw.

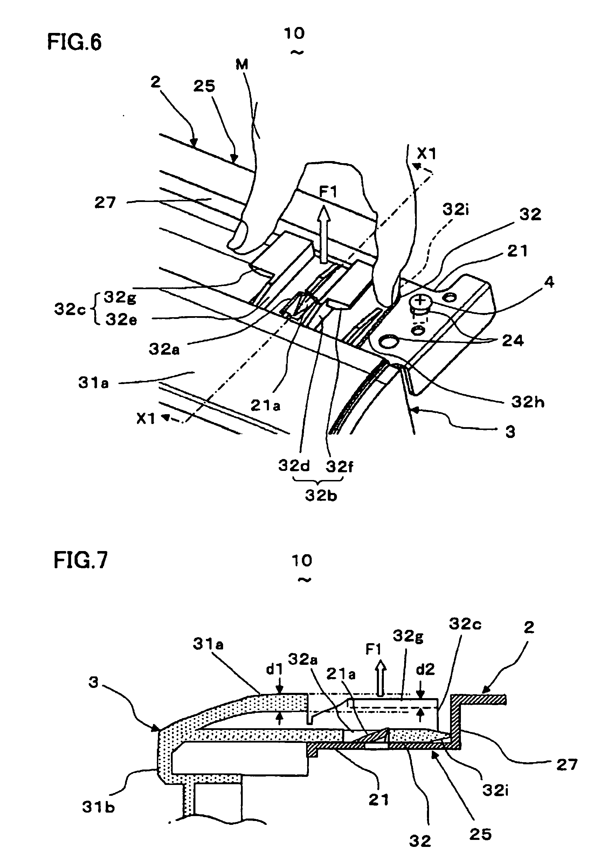

Next, the process of releasing the engagement of the front panel 3 with the reinforcement plate 2 is described with reference to FIGS. 6 and 7. FIG. 6 is the enlarged view of the portion D in FIG. 5A and shows that one of the screw holes 24 in the reinforcement plate 2 is screwed by a screw 4. In FIGS. 6 and 7, the engaging pawl 21 a in the connecting portion 21 of the reinforcement plate 2 is a triangular projection which is formed by punching the planer plate, and projects from the planar plate. A taper 32i is provided in a tip of the projecting plate 32 in the front panel 3. By such a configuration of the taper 32i as described above, the projecting plate 32 slides on an upper surface of the reinforcement plate 2 and covers the engaging pawl 21a when engaged with the reinforcement plate 2, and thereby the engaging hole 32a in the projecting plate 32 and the engaging pawl 21a on the reinforcement plate 2 can be engaged with each other smoothly. When a user releases the engagement of the front panel 3 with the reinforcement plate 2 and detaches the front panel 3 from the reinforcement plate 2, the collar portions 32f and 32g of the L-shaped ribs 32b and 32c are pinched with and caught in fingers M of a user's thumb and forefinger and picked up upward, and then the engaging pawl 21 a is detached from the engaging hole 32a easily and thereby the engagement is released. Moreover, the above engagement can be released without an influence of a wall of the L-shaped reinforcement portion 27 in the tip of the projecting plate 32. Furthermore, the L-shaped rib 32b is located not in the end portion 32h of the projecting plate 32 in the width direction but in the substantial center of the projecting plate 32 in the width direction, so that even when the screw hole 24 which is located in proximity to the end portion 32h is screwed by the screw 4, it is possible to pinch the collar portion 32f without the influence of the screw 4. As shown in FIG. 7, a thickness d2 of the collar portion 32g (the same applies to the collar portion 32f) in the L-shaped rib 32c (the same applies to the L-shaped rib 32b) is disposed to be within a thickness of a wall thickness d1 of an external wall of the frame 31 a which is substantially parallel to the projecting plate 32 of the front panel 3. When the front panel 3 is pulled out from a mold in forming the front panel 3 in the mold, the above configuration can prevent the L-shaped ribs 32b and 32c from lying in the way, when the front panel 3 is pulled out from the mold. Accordingly, the front panel 3 can be formed in a mold. Moreover, the front panel 3 is elastic, so that the whole front panel 3 is easily removed from the reinforcement plate 2 by removing from the projecting plate 32 in one end of the front surface portion 31b of the front panel 3.

As described above, according to the information reproducing apparatus 10 of the present preferred embodiment, the two L-shaped ribs 32b and 32c are provided on the projecting plate 32 in the front panel 3, thus the collar portions 32f and 32g of the L-shaped ribs 32b and 32c can be pinched and pulled up with the fingers M, so that the projecting plate 32 which engages with the reinforcement plate 2 can be pulled up strongly, and the engagement can be easily released without damaging the fingers (nails) by using only the fingers M. Consequently, the front panel 3 which is fixed to the body chassis 1 can be detached easily. Moreover, in a detachment operation of the front panel during an adjustment process in a production line or during a repair, the process can be rapidly carried out without the jigs and so on, thus the processing efficiency of the production line is improved and the adjustment of the information reproducing equipment and so on can be carried out efficiently. The L-shaped ribs 32b and 32c are located in the substantial center of the projecting plate 32, so that even when there is projecting members such as the screw 4 in proximity to the end portion 32h of the projecting plate 32 in the width direction, it is possible to pinch the collar portions 32f and 32g of the L-shaped ribs 32b and 32c and release the engagement without the interruption of the projecting members. Even in case of releasing the engagement by using the jigs, the collar portions 32f and 32g can be pulled up with the simple jigs such as a cord, a wire, or the like. Moreover, the collar portions 32f and 32g of the L-shaped ribs 32b and 32c are made up in the direction parallel to the projecting plate 32, so that the direction from which the mold of the collar portions 32f and 32g is pulled out is the same as the direction from which the mold of the projecting plate 32 is pulled out. Thus, it is possible to form the mold without a major change from the conventional mold making. The plate thicknesses of the L-shaped ribs 32b and 32c and the projecting plate 32 are substantially the same with each other, so that the generation of the concave portion called the surface sink (the concaved striation) and the linear striation called the weld line on the outer surface of the molded components associated with the difference in hardening time during the formation of the components can be suppressed. The components can be pulled out from the mold smoothly, so that the whitening of the molded components caused by the unnecessary stress due to the unsmoothness and so on can be eliminated. Consequently, it is possible to form the projecting plate 32 without lowering the quality and the production yield.

The present invention is not limited to the composition of the preferred embodiment described above, however, various modification are applicable without departing from the scope of the invention. For example, the collar portions of the L-shaped ribs may be directly connected to the front surface portion of the front panel to increase the retention strength of the collar portions. Moreover, the L-shaped ribs may be formed on the plural projecting plates so that all the engagements can be released with the fingers.

This application is based on Japanese utility model application 2006-8700 filed October 25, 2006.

## Claims

1. An information reproducing apparatus (10), comprising:
a body chassis (1) having substantially a rectangular shape;
a reinforcement plate (2) which is fixed to the body chassis (1) to be substantially parallel to a bottom surface portion (11) of the body chassis (1) to attach a front panel (3); and
the front panel (3) of substantial rectangular shape which engages with and is attached to the reinforcement plate (2) to cover a front surface side of the body chassis (1),
wherein the reinforcement plate (2) is made up of a substantial rectangular planer plate and includes screw holes (24) to screw the reinforcement plate (2) to the body chassis (1) in an end of the reinforcement plate (2) in a longitudinal direction and plural engaging pawls (21 a, 22a, 23a) which project from an upper surface of the substantial rectangular planer plate,
wherein the front panel (3) includes plural projecting plates (32, 33, 34, 37, 38, 39) which are located in an upper portion and a lower portion of a back surface of a front surface portion (31 b), respectively, so that they are substantially perpendicular to the front surface portion (31 b) and substantially parallel to the reinforcement plate (2), and
is attached to the body chassis (1) by using the respective projecting plates (32, 33, 34, 37, 38, 39) in the upper portion and the lower portion,
wherein the projecting plates (32, 33, 34) in the upper portion of the front surface portion (31b) of the front panel (3) is located in plural positions including an end portion of the front surface portion (31 b) in a longitudinal direction and includes substantial rectangular engaging holes (32a, 33a, 34a) which engage with and are fixed to engaging pawls (21 a, 22a, 23a) in the reinforcement plate (2),
wherein the projecting plate (32) which is located in the end portion of the front surface portion (31b) in the longitudinal direction out of the projecting plates (32, 33, 34) which are located on the upper portion of the front surface portion (31 b) includes two planar ribs (32b, 32c) which extend upward from the projecting plate (32) so as to be substantially parallel to each other and to be substantially perpendicular to the projecting plate (32), and has one of the engaging holes (32a) between the two ribs (32b, 32c), and
wherein the engaging holes (32a, 33a, 34a) in the projecting plates (32, 33, 34) overlap and engage with an upside of the engaging pawls (21 a, 22a, 23a) on the reinforcement plate (2) so that the projecting plates (32, 33, 34) are fixed to the reinforcement plate (2),
**characterised in that** a collar portion (32f, 32g) is located on both of the two ribs (32b, 32c) to be substantially parallel to the projecting plate (32) and
that an engagement of the front panel (3) with the reinforcement plate (2) is released by pulling up the collar portions (32f, 32g) upward with fingers.

2. The information reproducing apparatus (10) according to claim 1, wherein
the two ribs (32b, 32c) are L-shaped ribs which have the collar portion (32f, 32g) on upper end of the respective two ribs (32b, 32c) in opposite directions from each other so as to be substantially parallel to the projecting plate (32).

3. The information reproducing apparatus (10) according to claim 1 or 2, wherein
at least one of the two ribs (32b, 32c) is located not in an end portion (32h) of the projecting plate (32) in a width direction (a longitudinal direction in the front panel (3)) but in a center of the projecting plate (32) in the width direction.

4. The information reproducing apparatus (10) according to one of claims 1 to 3, wherein the two ribs (32b, 32c) are L-shaped ribs which have the collar portion (32f, 32g) on upper end of the respective two ribs (32b, 32c) in opposite directions from each other so as to be substantially parallel to the projecting plate (32).

## Patentansprüche

1. Informationsvervielfältigungsgerät, das umfasst:
ein Gehäusechassis (1), das im Wesentlichen eine rechtwinkelige Form hat, eine Verstärkungsplatte (2), welche an dem Gehäusechassis (1) befestigt ist, um im Wesentlichen parallel zu einem Bereich einer Unterseite des Gehäusechassis (1) angeordnet zu sein, um eine Frontblende (3) anzulenken,
wobei die Frontblende (3) hat im Wesentlichen eine rechtwinkelige Form, die mit der Verstärkungsplatte (2) in Eingriff steht und an diese angelenkt ist, um eine Vorderseite des Gehäusechassis (1) zu verdecken, wobei die Verstärkungsplatte (2) aus einer im wesentlichen rechtwinkeligen, flachen Platte gefertigt ist, die Schraubenlöcher (24) aufweist, um die Verstärkungsplatte (2) mit einem Ende der Verstärkungsplatte (2) in einer Längsausrichtung an das Gehäusechassis (1) anzuschrauben, und eine Vielzahl Verbindungsklinken (21 a, 22a, 23a), welche von einer Oberfläche der der im wesentlichen rechtwinkeligen, flache Platte hervorstehen,
wobei die Fronblende (3) eine Vielzahl vorstehender Scheiben (32, 33, 34, 37, 38, 39) umfasst, die in einem oberen Bereich bzw. unteren Bereich einer Rückseite eines Vorderseitenbereichs (31 b) angeordnet sind, so dass sie im wesentlichen senkrecht zum Vorderseitenbereich (31b) und im wesentlichen parallel zur Verstärkungsplatte (2) sind,
und wobei die Frontblende (3) an das Gehäusechassis (1) mittels der entsprechenden vorstehenden Scheiben (32, 33, 34, 37, 38, 39) in dem oberen Bereich bzw. dem unteren Bereich angelenkt ist,
wobei die vorstehenden Scheiben (32, 33, 34) in dem oberen Bereich des Vorderseitenbereichs (31 b) der Frontblende (3) an mehreren Stellen vorgesehen sind, die einen Endbereich in Längserstreckung des Vorderseitenbereichs (31 b) umfassen und im wesentlichen rechtwinkelige Aufnahmeöffnungen (32a, 33a, 34a) aufweisen, die mit den Verbindungsklinken (21 a, 22a, 23a) der Verstärkungsplatte (2) in Eingriff stehen und an diese angelenkt sind,
wobei die vorstehende Scheibe (32) der vorstehenden Scheiben (32, 33, 34), die in dem oberen Bereich des Vorderseitenbereichs (31 b) angeordnet sind, in dem Endbereich in Längserstreckung des Vorderseitenbereichs (31 b) angeordnet ist, zwei flache Rippen (32b, 32c) aufweist, die sich von der vorstehenden Scheibe (32) aufwärts erstrecken, derart, dass sie im wesentlichen parallel zu einander und im wesentlich senkrecht zur vorstehenden Scheibe (32) angeordnet sind, und wobei die vorstehende Scheibe (32) zwei Aufnahmeöffnungen (32a) zwischen den beiden Rippen (32b, 32c) aufweist, und
wobei die Aufnahmeöffnungen (32a, 33a, 34a) in den vorstehenden Scheiben (32, 33, 34) mit einer Oberseite der Verbindungsklinken (21 a, 22a, 23a) auf der Verstärkungsplatte (2) sich überschneiden und mit diesen in Eingriff stehen, so dass die vorstehenden Scheiben (32, 33 34) an der Verstärkungsplatte (2) angelenkt sind,
**dadurch gekennzeichnet, dass** ein Kragenbereich (32f, 32g) auf beiden der zwei Rippen (32b, 32c) angeordnet ist, um im Wesentlichen parallel mit der vorstehenden Scheibe (32) zu sein, und dass eine Verbindung der Frontblende (3) mit der Verstärkungsplatte (2) dadurch lösbar ist, dass der Kragenbereich mit Fingern aufwärts ziehbar ist.

2. Informationsvervielfältigungsgerät nach Anspruch 1, wobei die beiden Rippen (32b, 32c) L-förmige Rippen sind, die den Kragenbereich (32f, 32g) an einem oberen Ende der jeweils zwei Rippen (32b, 32c) aufweisen und die in entgegengesetzte Richtungen zeigen, derart, dass sie im wesentlich parallel zu der vorstehenden Scheibe (32) sind.

3. Informationsvervielfältigungsgerät nach Anspruch 1 oder 2, wobei wenigstens einer der beiden Rippen (32b, 32c) nicht in einem Endbereich (32h) der vorstehenden Platte (32) in Breitenrichtung (eine Längserstreckung der Frontblende (3)) angeordnet ist, sondern in einer Mitte der vorstehenden Scheibe (32) in Breitenrichtung.

4. Informationsvervielfältigungsgerät nach einem der Ansprüche 1 bis 3, wobei die beiden Rippen (32b, 32c) L-förmige Rippen sind, die einen Kragenbereich (32f, 32g) an dem oberen Ende der jeweils zwei Rippen (32b, 32c) aufweisen und die in entgegengesetzte Richtungen zeigen, derart, dass sie im wesentlich parallel zu der vorstehenden Scheibe (32) sind.

## Revendications

1. Appareil de reproduction d'informations (10), comprenant :
un châssis formant corps (1) ayant sensiblement une forme rectangulaire;
une plaque de renfort (2) qui est fixée au châssis formant corps (1) pour être sensiblement parallèle à une partie formant surface de fond (11) du châssis formant corps (1) pour attacher un panneau avant (3) ; et
le panneau avant (3) de forme sensiblement rectangulaire met en prise et est attaché à la plaque de renfort (2) pour couvrir un côté surface avant du châssis formant corps (1), dans lequel la plaque de renfort (2) est constituée d'une plaque plane sensiblement rectangulaire et inclut des trous de vis (24) pour visser la plaque de renfort (2) au châssis formant corps (1) dans une extrémité de la plaque de renfort (2) dans une direction longitudinale et plusieurs cliquets de mise en prise (21a, 22a, 23a) qui dépassent d'une surface supérieure de la plaque plane sensiblement rectangulaire,
dans lequel le panneau avant (3) inclut plusieurs plaques en saillie (32, 33, 34, 37, 38, 39) qui sont respectivement situées dans une partie supérieure et une partie inférieure d'une surface arrière d'une partie formant surface avant (31b), de sorte qu'elles sont sensiblement perpendiculaires à la partie formant surface avant (31b) et sensiblement parallèles à la plaque de renfort (2), et est attaché au châssis formant corps (1) en utilisant les plaques en saillie respectives (32, 33, 34, 37, 38, 39) dans la partie supérieure et la partie inférieure,
dans lequel les plaques en saillie (32, 33, 34) dans la partie supérieure de la partie formant surface avant (31b) du panneau avant (3) sont situées dans plusieurs positions incluant une partie d'extrémité de la partie formant surface avant (31b) dans une direction longitudinale et comportent des trous de mise en prise sensiblement rectangulaires (32a, 33a, 34a) qui mettent en prise et sont fixés à des cliquets de mise en prise (21a, 22a, 23a) dans la plaque de renfort (2),
dans lequel la plaque en saillie (32), qui est située dans la partie d'extrémité de la partie formant surface avant (31b) dans la direction longitudinale hors des plaques en saillie (32, 33, 34) qui sont situées sur la partie supérieure de la partie formant surface avant (31b), comporte deux nervures planes (32b, 32c) qui s'étendent vers le haut à partir de la plaque en saillie (32) de façon à être sensiblement parallèles l'une à l'autre et à être sensiblement perpendiculaires à la plaque en saillie (32), et présente un des trous de mise en prise (32a) entre les deux nervures (32b, 32c), et
dans lequel les trous de mise en prise (32a, 33a, 34a) dans les plaques en saillie (32, 33, 34) se chevauchent et mettent en prise un côté supérieur des cliquets de mise en prise (21a, 22a, 23a) sur la plaque de renfort (2) de sorte que les plaques en saillie (32, 33, 34) sont fixées à la plaque de renfort (2),
**caractérisé en ce qu'**une partie formant collier (32f, 32g) est située sur l'ensemble des deux nervures (32b, 32c) pour être sensiblement parallèle à la plaque en saillie (32), et
**en ce qu'**une mise en prise du panneau avant (3) avec la plaque de renfort (2) est libérée en remontant les parties formant collier (32f, 32g) vers le haut avec les doigts.

2. Appareil de reproduction d'informations (10) selon la revendication 1, dans lequel les deux nervures (32b, 32c) sont des nervures en forme de L qui possèdent la partie formant collier (32f, 32g) sur une extrémité supérieure des deux nervures respectives (32b, 32c) dans des sens opposés l'un à l'autre de façon à être sensiblement parallèles à la plaque en saillie (32).

3. Appareil de reproduction d'informations (10) selon la revendication 1 ou 2, dans lequel au moins une des deux nervures (32b, 32c) n'est pas située dans une partie d'extrémité (32h) de la plaque en saillie (32) dans un sens de la largeur (une direction longitudinale dans le panneau avant (3)) mais dans un centre de la plaque en saillie (32), dans le sens de la largeur.

4. Appareil de reproduction d'informations (10) selon l'une des revendications 1 à 3, dans lequel les deux nervures (32b, 32c) sont des nervures en forme de L qui possèdent la partie formant collier (32f, 32g) sur une extrémité supérieure des deux nervures respectives (32b, 32c) dans des sens opposés l'un à l'autre de façon à être sensiblement parallèles à la plaque en saillie (32).
